# EUROPEAN PATENT APPLICATION

(11) **EP 4 663 405 A1**
(43) Date of publication of application: **17.12.2025**
(21) Application number: 25761444.6
(22) Date of filing: 18.02.2025
(51) Int. Cl.: B32B 27/00, B32B 7/02, H01L 21/30

(54) **MEMBER, METHOD FOR MANUFACTURING MEMBER, AND SEMICONDUCTOR-MANUFACTURING-RELATED DEVICE**

(30) Priority: 28.02.2024 JP 2024028867; 05.07.2024 JP 2024109130
(71) Applicant: Daikin Industries, Ltd., Osaka-shi, Osaka 530-0001 (JP)
(72) Inventor: OKUNO, Shingo, Osaka-Shi, Osaka 530-0001 (JP); TANAKA, Yuhei, Osaka-Shi, Osaka 530-0001 (JP); KISHIKAWA, Yosuke, Osaka-Shi, Osaka 530-0001 (JP)
(74) Representative: Hoffmann Eitle
(86) International application number: PCT/JP2025/005445
(87) International publication number: WO 2025/182685

(57) **Abstract**

The disclosure aims to provide a member excellent in chemical resistance, a method for manufacturing the same, and a semiconductor manufacturing-related apparatus. Provided is a member including: a material (a) with a surface at least partially laminated with an aromatic ring-containing barrier material. The member includes at least one selected from the group consisting of an architectural finishing material member, a mobility member, an aerospace member, a semiconductor member, and an information and communication member.

## Description

### TECHNICAL FIELD

The disclosure relates to members, methods for producing members, and semiconductor manufacturing-related apparatuses.

### BACKGROUND ART

Techniques for coating a substrate to prevent contamination in a semiconductor manufacturing apparatus and the like have been proposed (see, for example, Patent Literatures 1 to 3).

### CITATION LIST

### - Patent Literature

Patent Literature 1: JP 2009-21369 A
Patent Literature 2: JP 2009-239151 A
Patent Literature 3: JP 2011-23563 A

### SUMMARY OF INVENTION

### - Technical Problem

The disclosure aims to provide a member excellent in chemical resistance, a method for producing the same, and a semiconductor manufacturing-related apparatus.

### - Solution to Problem

The disclosure (1) relates to a member including: a material (a) with a surface at least partially laminated with an aromatic ring-containing barrier material,
the member including at least one selected from the group consisting of an architectural finishing material member, a mobility member, an aerospace member, a semiconductor member, and an information and communication member.

The disclosure (2) relates to the member according to the disclosure (1), wherein the aromatic ring-containing barrier material has an aromatic content (a proportion of carbon atoms in a molecule that constitute an aromatic ring) of 20% or more.

The disclosure (3) relates to the member according to the disclosure (1) or (2), wherein the aromatic ring-containing barrier material includes at least one selected from the group consisting of a compound represented by the following formula (a), a compound represented by the following formula (b), and a compound represented by the following formula (c): 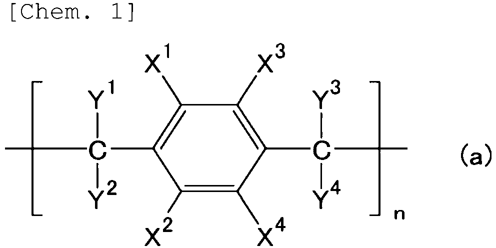 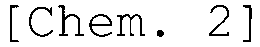 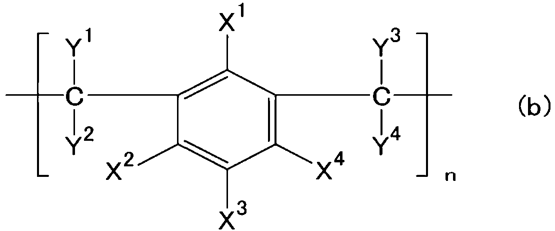 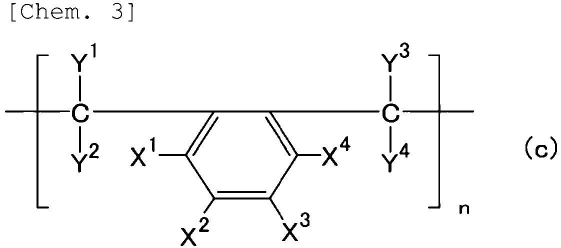 wherein X¹ to X⁴ are each independently hydrogen, a halogen, a monovalent hydrocarbon group, or an optionally fluorinated alkoxy group; Y¹ to Y⁴ are each independently hydrogen or a halogen; and n is an integer of 1 or greater.

The disclosure (4) relates to the member according to any one of the disclosures (1) to (3), wherein the aromatic ring-containing barrier material includes at least one selected from the group consisting of polyparaxylene and polyparaxylene having a halogen introduced into a benzene ring.

The disclosure (5) relates to the member according to any one of the disclosures (1) to (3), wherein the aromatic ring-containing barrier material includes at least one selected from the group consisting of a polymer represented by the following formula (1), a polymer represented by the following formula (2), and a polymer represented by the following formula (5):

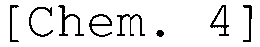

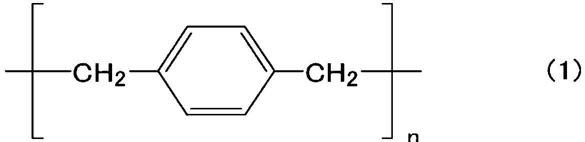

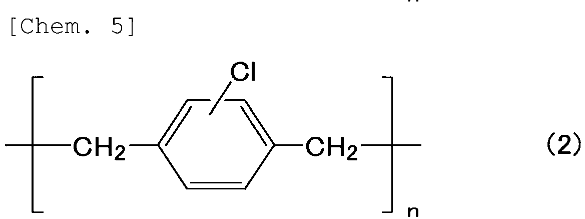

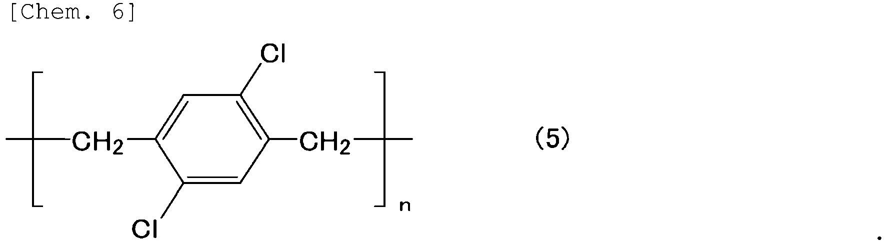

The disclosure (6) relates to the member according to any one of the disclosures (1) to (3), wherein the aromatic ring-containing barrier material includes at least one selected from the group consisting of a polymer represented by the following formula (2) and a polymer represented by the following formula (5):

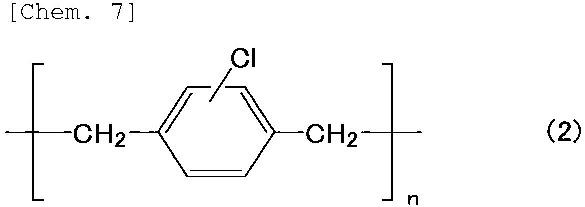

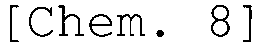

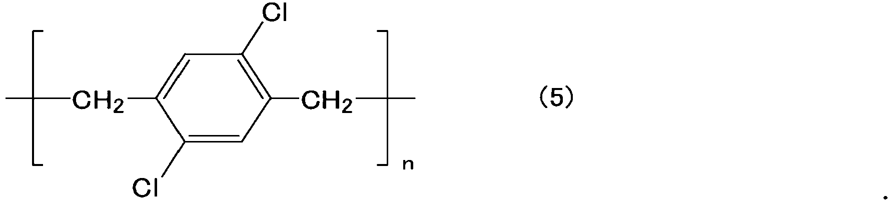

The disclosure (7) relates to the member according to any one of the disclosures (1) to (6), wherein the material (a) includes at least one selected from the group consisting of resin, rubber, metal, and ceramic.

The disclosure (8) relates to the member according to any one of the disclosures (1) to (7), wherein the material (a) includes at least one selected from the group consisting of resin and rubber.

The disclosure (9) relates to the member according to any one of the disclosures (1) to (8), wherein the material (a) includes at least one selected from the group consisting of polyphenylene sulfide, a polyetherimide resin, and a polyether ether ketone resin.

The disclosure (10) relates to the member according to any one of the disclosures (1) to (9), wherein the material (a) has a 1% mass reduction by thermal decomposition, at a temperature of 560°C or lower.

The disclosure (11) relates to the member according to any one of the disclosures (1) to (10), wherein the aromatic ring-containing barrier material constitutes a coating having a thickness of 0.01 to 100 µm.

The disclosure (12) relates to the member according to any one of the disclosures (1) to (11), wherein the aromatic ring-containing barrier material constitutes a coating having a thickness of 1 to 50 µm.

The disclosure (13) relates to the member according to any one of the disclosures (1) to (12), wherein the member includes at least one selected from the group consisting of a piping material, a nozzle, a tube, a tank, a container, a joint, a valve, a pump, a spin chuck, an O-ring, a packing, a gasket, a washer, and a sealing material.

The disclosure (14) relates to the member according to any one of the disclosures (1) to (13), wherein the member is for a semiconductor manufacturing-related apparatus.

The disclosure (15) relates to the member according to the disclosure (14), wherein the semiconductor manufacturing-related apparatus is an apparatus in which a chemical is used.

The disclosure (16) relates to the member according to the disclosure (15), wherein the chemical includes at least one selected from the group consisting of TMAH ([(CH₃)₄N]⁺[OH]⁻), sulfuric acid, isopropyl alcohol, hydrofluoric acid, a mixed acid of hydrofluoric acid and nitric acid, a sulfuric acid hydrogen peroxide mixture (SPM), SC1 (a mixture of NH₄OH, H₂O₂, and H₂O), SC2 (a mixture of HCl, H₂O₂, and H₂O), phosphoric acid, and hydrochloric acid.

The disclosure (17) relates to the member according to the disclosure (15), wherein the chemical includes at least one selected from the group consisting of a silicon-based gas, an arsenic-based gas, a phosphorus-based gas, a boron-based gas, a metal hydride gas, a metal alkyl gas, a halogenated hydrocarbon gas, a halogen-halide gas, a nitrogen oxide gas, hydrogen sulfide gas, ammonia gas, trimethylamine gas, propane gas, trimethylaluminum gas, hydrogen gas, helium gas, nitrogen gas, oxygen gas, argon gas, and carbon dioxide gas.

The disclosure (18) relates to the member according to any one of the disclosures (14) to (17), wherein the member for a semiconductor manufacturing-related apparatus has a surface that comes into contact with the chemical, at least partially laminated with the aromatic ring-containing barrier material.

The disclosure (19) relates to the member according to any one of the disclosures (14) to (18), wherein the member for a semiconductor manufacturing-related apparatus is for a semiconductor manufacturing-related apparatus in which a chemical is used, and has a surface that comes into contact with the chemical, at least partially laminated with the barrier material.

The disclosure (20) relates to the member according to any one of the disclosures (1) to (19), wherein the member has a mass change rate of 70.0% by mass or less in the following chemical resistance evaluation:
(Chemical resistance evaluation)
a test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours;
after drying, the mass of the test piece before immersion is measured at room temperature (20°C);
the test piece after the measurement is completely immersed in a mixed acid of hydrofluoric acid and nitric acid (hydrofluoric acid concentration 50%, nitric acid concentration 60%) having a concentration ratio (molar ratio) of hydrofluoric acid to nitric acid of 1:5 or a mixed acid of hydrofluoric acid and nitric acid (hydrofluoric acid concentration 50%, nitric acid concentration 60%) having a concentration ratio (molar ratio) of hydrofluoric acid to nitric acid of 1:100, and held at room temperature (20°C) for one day (24 hours) or one week (168 hours);
the test piece after the holding is washed with pure water, wiped to remove water droplets on a surface, and dried at 60°C for 12 hours;
the mass of the test piece after the immersion is measured at room temperature (20°C); and
the mass change rate (%) is calculated from the masses measured before and after the immersion.

The disclosure (21) relates to the member according to any one of the disclosures (1) to (20), wherein the member has a mass change rate of 70.0% by mass or less in the following chemical resistance evaluation:
(Chemical resistance evaluation)
a test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours;
after drying, the mass of the test piece before immersion is measured at room temperature (20°C);
the test piece after the measurement is completely immersed in SPM (concentrated sulfuric acid and hydrogen peroxide solution in a volume ratio of 2:1) and held at room temperature (20°C) for one day (24 hours);
the test piece after the holding is washed with pure water, wiped to remove water droplets on a surface, and dried at 60°C for 12 hours;
the mass of the test piece after the immersion is measured at room temperature (20°C); and
the mass change rate (%) is calculated from the masses measured before and after the immersion.

The disclosure (22) relates to the member according to any one of the disclosures (1) to (21), wherein the member has a mass change rate of 70.0% by mass or less in the following chemical resistance evaluation:
(Chemical resistance evaluation)
a test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours;
after drying, the mass of the test piece before immersion is measured at room temperature (20°C);
the test piece after the measurement is completely immersed in concentrated sulfuric acid (98%) and held at 90°C for one week (168 hours);
the test piece after the holding is washed with pure water, wiped to remove water droplets on a surface, and dried at 60°C for 12 hours;
the mass of the test piece after the immersion is measured at room temperature (20°C); and
the mass change rate (%) is calculated from the masses measured before and after the immersion.

The disclosure (23) relates to the member according to any one of the disclosures (1) to (22), wherein the member has a mass change rate of 70.0% by mass or less in the following chemical resistance evaluation:
(Chemical resistance evaluation)
a test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours;
after drying, the mass of the test piece before immersion is measured at room temperature (20°C);
the test piece after the measurement is completely immersed in TMAH ([(CH₃)₄N]⁺[OH]⁻) (25% concentration) at 80°C and held for one week (168 hours);
the test piece after the holding is washed with pure water, wiped to remove water droplets on a surface, and dried at 60°C for 12 hours;
the mass of the test piece after the immersion is measured at room temperature (20°C); and
the mass change rate (%) is calculated from the masses measured before and after the immersion.

The disclosure (24) relates to a method for producing the member according to any one of the disclosures (1) to (23), the method including: producing the member at a temperature equal to or lower than a temperature at which the material (a) has a 1% mass reduction by thermal decomposition.

The disclosure (25) relates to the method for producing the member according to the disclosure (24), the method further including: coating a surface of the material (a) with the aromatic ring-containing barrier material by CVD, sputtering, ion deposition, or vacuum deposition.

The disclosure (26) relates to a semiconductor manufacturing-related apparatus including the member according to any one of the disclosures (1) to (23) mounted thereon.

The disclosure (27) relates to the semiconductor manufacturing-related apparatus according to the disclosure (26), which includes at least one selected from the group consisting of a semiconductor manufacturing apparatus and a semiconductor manufacturing apparatus-related apparatus.

The disclosure (28) relates to the semiconductor manufacturing-related apparatus according to the disclosure (27), wherein the semiconductor manufacturing apparatus includes at least one selected from the group consisting of a thin film formation/etching/cleaning/drying apparatus, an inspection/evaluation and manufacturing apparatus, a wafer processing apparatus, a resist processing apparatus, an etching apparatus, a cleaning/drying apparatus, a heat treatment apparatus, a CVD apparatus, a sputtering apparatus, a thin film formation apparatus, an inspection/evaluation apparatus, a processing apparatus, a dicing apparatus, a bonding apparatus, a packaging apparatus, a testing apparatus, a probing apparatus, a handler, an aging apparatus, and an inspection apparatus; and
the semiconductor manufacturing apparatus-related apparatus includes at least one selected from the group consisting of a transport apparatus, a pure water/chemical liquid apparatus, a gas apparatus, a clean room apparatus, and a manufacturing-related apparatus.

The disclosure (29) relates to the semiconductor manufacturing-related apparatus according to the disclosure (28), wherein the thin film formation/etching/cleaning/drying apparatus includes at least one selected from the group consisting of a vacuum deposition apparatus, a sputtering apparatus, a cleaning apparatus, a drying apparatus, and a scrub cleaning apparatus;
the inspection/evaluation and manufacturing apparatus is a defect repair apparatus,
the wafer processing apparatus is a wafer marking apparatus,
the resist processing apparatus includes at least one selected from the group consisting of a coating apparatus, a developing apparatus, a resist stripping apparatus, an ashing apparatus, and a baking apparatus;
the etching apparatus includes at least one selected from the group consisting of a dry etching apparatus and a wet etching apparatus;
the cleaning/drying apparatus includes at least one selected from the group consisting of a dry cleaning apparatus, a wet cleaning apparatus, a scrub cleaning apparatus, and a drying apparatus;
the heat treatment apparatus includes at least one selected from the group consisting of an oxidation apparatus, a diffusion apparatus, and an annealing apparatus;
the CVD apparatus includes at least one selected from the group consisting of a high-pressure CVD apparatus, a SACVD apparatus, a low-pressure CVD apparatus, a metal CVD apparatus, and an ALD apparatus;
the thin film formation apparatus includes at least one selected from the group consisting of a vacuum deposition apparatus, a compound semiconductor epitaxial apparatus (MOCVD apparatus, MBE apparatus), and a plating apparatus;
the inspection/evaluation apparatus is an Auger electron spectroscopy apparatus,
the processing apparatus includes at least one selected from the group consisting of a wafer marking apparatus, a back grinding machine, a bump plating apparatus, a back grinder tape applicator, a back grinder, and a back grinder tape peeler;
the dicing apparatus includes at least one selected from the group consisting of a dicing apparatus and a wafer mounting apparatus,
the bonding apparatus includes at least one selected from the group consisting of a die bonding apparatus, a hybrid bonding apparatus, a wire bonding apparatus, an inner lead bonding apparatus, an outer lead bonding apparatus, and a flip chip bonding apparatus;
the packaging apparatus includes at least one selected from the group consisting of a molding apparatus, a deburring apparatus, and a soldering apparatus;
the testing apparatus includes at least one selected from the group consisting of an electron beam testing apparatus and a laser beam testing apparatus;
the probing apparatus is a prober,
the aging apparatus includes at least one selected from the group consisting of an aging apparatus, a burn-in apparatus, an IC insertion apparatus, and an IC extraction apparatus;
the inspection apparatus includes at least one selected from the group consisting of a thermal test apparatus, a temperature and humidity test apparatus, a pressure cooker apparatus, a laser processing system, and a life test apparatus;
the transport apparatus is a stocker,
the pure water/chemical liquid apparatus includes at least one selected from the group consisting of a pure water production apparatus, an ultrafiltration apparatus, a reverse osmosis apparatus, a sterilization apparatus, a chemical supply apparatus, a slurry supply apparatus, a chemical purification apparatus, and a waste liquid treatment apparatus;
the gas apparatus includes at least one selected from the group consisting of a gas generation apparatus, a gas purification apparatus, a gas mixing apparatus, a gas detection apparatus, and an exhaust gas treatment apparatus;
the clean room apparatus includes at least one selected from the group consisting of a clean bench, a clean tunnel, an environmental test apparatus, an air shower, and a pass box;
the manufacturing-related apparatus includes at least one selected from the group consisting of a jig cleaning/drying apparatus, a flow control instrument, a taping apparatus, a packaging apparatus, and a liquid/gas measuring instrument.

### - Advantageous Effects of Invention

The disclosure can provide a member excellent in chemical resistance, a method for producing the same, and a semiconductor manufacturing-related apparatus.

### DESCRIPTION OF EMBODIMENTS

The disclosure will be specifically described below.

The disclosure relates to a member including a material (a) with a surface at least partially laminated with an aromatic ring-containing barrier material, the member including at least one selected from the group consisting of an architectural finishing material member, a mobility member, an aerospace member, a semiconductor member, and an information and communication member.

The member of the disclosure has excellent chemical resistance and adhesion.

The member of the disclosure includes a material (a) with a surface at least partially laminated with an aromatic ring-containing barrier material.

The material (a) is not limited, and any known organic or inorganic material can be used. Specific examples thereof include resin, rubber, metal, and ceramic. The material (a) preferably includes at least one selected from the group consisting of resin, rubber, metal, and ceramic, more preferably includes at least one selected from the group consisting of resin and rubber.

The resin is not limited, and any known resin can be used. Examples thereof include a polyolefin resin, a polyester resin, a polyamide (PA) resin, and a fluororesin. A heat-resistant resin such as an engineering plastic resin and a super engineering plastic resin can also be suitably used.

In order to improve the adhesion to an aromatic ring-containing barrier material, the resin is preferably a fluorine-free resin (a resin that does not contain fluorine) or a heat-resistant resin, more preferably a heat-resistant resin that does not contain fluorine.

The heat-resistant resin may be any resin that is generally recognized to have heat resistance. Still, a heat-resistant resin other than a fluorine-containing ethylenic polymer (an ethylenic polymer that contains fluorine) is preferably used.

The term "heat-resistant" herein means the property with which the resin can be continuously used at a temperature of 150°C or higher.

Examples of the heat-resistant resin include a polyamideimide resin (PAI), a polyimide resin (PI), a polyethersulfone resin (PES), a polyetherimide resin (PEI), an aromatic polyether ketone resin (PAEK), an aromatic polyester resin, and a polyarylene sulfide resin (PAS). One type may be used alone, or two or more types may be used in combination.

PAI is a resin including a polymer containing an amide bond and an imide bond in its molecular structure. Any PAI may be used, and examples thereof include resins including a high-molecular-weight polymer obtained by any of the following reactions: a reaction between an aromatic diamine containing an amide bond in the molecule and an aromatic tetravalent carboxylic acid (e.g., pyromellitic acid); a reaction between an aromatic trivalent carboxylic acid (e.g., trimellitic anhydride) and a diamine (e.g., 4,4-diaminophenyl ether) or a diisocyanate (e.g., diphenylmethane diisocyanate); and a reaction between a dibasic acid containing an aromatic imide ring in the molecule and a diamine. In order to achieve excellent heat resistance, the PAI preferably includes a polymer containing an aromatic ring in the main chain. Characteristics of PAI include high heat stability, abrasion resistance, and creep resistance with which the material is less likely to deform under application of a load. In addition, PAI is thermoplastic and has excellent melt fabricability, and can be molded by extrusion or compression molding. The melt flow rate (MFR) is preferably in the range of 10 to 80 g/10 min.

PI is a resin including a polymer containing an imide bond in its molecular structure. Any PI may be used, and examples thereof include resins including a high-molecular-weight polymer obtained by a reaction such as a reaction of an aromatic tetravalent carboxylic anhydride (e.g., pyromellitic anhydride). In order to achieve excellent heat resistance, the PI preferably includes a polymer containing an aromatic ring in the main chain. Characteristics of PI include high heat resistance, insulating properties, low dielectric constant, low dielectric loss, and radiation resistance. PI is classified into non-thermoplastic polyimides, thermoplastic polyimides, thermosetting polyimides, and soluble polyimides. The melt flow rate (MFR) is preferably in the range of 0.1 to 50 g/10 min.

PES is a resin including a polymer containing a repeating unit represented by the following formula:

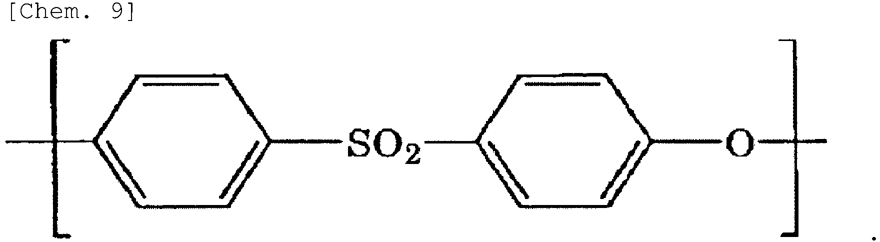

Any PES can be used, and examples thereof include a resin including a polymer obtained by polycondensation of dichlorodiphenylsulfone and bisphenol. PES is a highly heat-resistant non-crystalline plastic with a glass transition temperature (Tg) of 225°C. In addition to high heat resistance, PES has other excellent properties such as dimensional stability, high fluidity, and flame retardancy, and is used in a wide range of industrial fields, such as housings for electrical and electronic parts and automotive parts. The melt flow rate (MFR) is preferably in the range of 5 to 60 g/10 min.

PEI having an imide bond and an ether bond in the molecule, for example, can be used. The glass transition temperature of PEI is preferably 180°C or higher, more preferably 200°C or higher, while preferably 300°C or lower, more preferably 280°C or lower. PEI is an amorphous super engineering plastic and is excellent in flame retardancy, mechanical strength, electrical insulation, radiation resistance, UV resistance, and moldability, in addition to having high heat resistance. PEI is used in a wide range of industrial fields, including aircraft parts, various heat insulation parts, food manufacturing equipment, steam cleaning equipment, medical instruments (steam resistance), electrical and electronic parts (e.g., sonnet connectors), office automation equipment parts, and automobile lights (heat resistance and good plating properties). The melt flow rate (MFR) is preferably in the range of 1 to 30 g/10 min.

The aromatic polyether ketone resin is a resin containing a repeating unit composed of an arylene group, an ether group [-O-], and a carbonyl group [-C(=O)-]. Examples of the aromatic polyether ketone resin include a polyether ketone resin (PEK), a polyether ether ketone resin (PEEK), a polyether ketone ketone resin (PEKK), a polyether ether ketone ketone resin (PEEKK), and a polyether ketone ester resin. One of the aromatic polyether ketone resins may be used alone or two or more thereof may be used in combination.

The aromatic polyether ketone resin preferably includes at least one selected from the group consisting of PEK, PEEK, PEKK, PEEKK, and a polyether ketone ester resin, more preferably at least one selected from the group consisting of PEEK and PEKK, still more preferably PEEK. PEEK has a high continuous use temperature of 260°C and has excellent properties including heat resistance, hot water resistance, flame retardancy, mechanical properties, and electrical properties, and is used in the aerospace, automotive, medical instrument, 3D printer, food, and semiconductor fields. The melt flow rate (MFR) is preferably in the range of 1 to 20 g/10 min.

PAS is a resin including a polymer containing a repeating unit represented by the following formula: 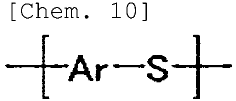 wherein Ar is an arylene group. The PAS is not limited, and examples thereof include polyphenylene sulfide (PPS). PPS is a thermoplastic resin with a normal heat resistance temperature of 220°C to 240°C and a cold resistance down to -20°C. PPS has excellent fatigue and creep properties, as well as good weather resistance and hydrolysis resistance. PPS is a flame-retardant material even without the addition of flame retardants, and also has heat shock resistance. PPS also has good moldability, allowing a high degree of freedom in the shape of the molded article. This allows PPS to be used for connectors, various electronic parts, and automotive parts in the electrical and electronic parts field. The melt flow rate (MFR) is preferably in the range of 10 to 50 g/10 min.

The heat-resistant resin preferably includes at least one selected from the group consisting of PAI, PI, PES, PEI, an aromatic polyether ketone resin, and PAS, more preferably at least one selected from the group consisting of PEI, an aromatic polyether ketone resin, and PAS, still more preferably an aromatic polyether ketone resin. The heat-resistant resin preferably includes at least one selected from the group consisting of PPS, PEI, and PEEK.

The rubber may be either a fluororubber or a non-fluororubber (rubber that does not contain fluorine). Specific examples of the rubber include fluororubber, acrylonitrile-butadiene rubber (NBR) or its hydrogenated product (HNBR), styrene-butadiene rubber (SBR), chloroprene rubber (CR), butadiene rubber (BR), natural rubber (NR), isoprene rubber (IR), cyclopentene rubber (CPR), and other diene rubbers, ethylene-propylene-termonomer copolymer rubber, silicone rubber, butyl rubber, epichlorohydrin rubber, acrylic rubber, chlorinated polyethylene (CPE), chlorosulfonated ethylene rubber (CSM), polyblend of acrylonitrile-butadiene rubber and vinyl chloride (PVC-NBR), ethylene propylene diene rubber (EPDM), and ethylene propylene rubber (EPM). In order to improve adhesion to an aromatic ring-containing barrier material, a non-flouororubber is preferred among these.

The metal is not limited, and any known metal can be used, including iron, steel, non-ferrous metals, and the like. For example, examples of steel include SPC material, SS material, SC material, SK material, stainless steel, high chromium molybdenum, high tensile steel, white cast iron, gray cast iron, and spheroidal graphite cast iron. Examples of non-ferrous metals include aluminum and aluminum alloys, copper and copper alloys, zinc and zinc alloys, titanium and titanium alloys, magnesium and magnesium alloys, and nickel and nickel alloys.

The ceramic is not limited, and any known ceramic can be used. Examples include alumina, zirconia, aluminum nitride, silicon carbide, silicon oxide, silicon nitride, forsterite, steatite, cordierite, sialon, machinable ceramics, barium titanate, lead zirconate, ferrite, and mullite.

Characteristics of alumina include excellent electrical insulation, heat resistance, abrasion resistance, and mechanical strength, as well as relatively high thermal conductivity. Such alumina is a highly versatile material.

Characteristics of zirconia include excellent thermal properties including a high melting point of 2700°C, a high maximum operating temperature of approximately 1200°C, and a high thermal shock resistance of Δ400°C. The thermal conductivity of zirconia is significantly lower than those of other ceramics.

Aluminum nitride is a material exhibiting extremely high thermal conductivity, excellent in heat dissipation, insulation, and thermal shock resistance, and is used as a substrate material. Aluminum nitride substrates can be metallized.

Characteristics of silicon carbide include extremely high chemical and physical stability and high hardness. Compared to other ceramics, silicon carbide has extremely high thermal conductivity and is semi-conductive.

Characteristics of silicon oxide include excellent heat resistance and thermal shock resistance. The Vickers hardness of silicon oxide is 8.6 to 9.8 GPa.

Characteristics of silicon nitride include a low coefficient of thermal expansion and chemical stability. Also owing to excellent abrasion resistance and electrical insulation properties, silicon nitride is used in a very wide range of industrial fields.

Forsterite is used as a heat insulating material and exhibits high insulation resistance, which makes forsterite widely used as an electrical insulating material. Forsterite has a dielectric constant of 6.5 and a low dielectric loss tangent (Tan δ), which makes forsterite useful as a high-frequency insulating material.

Characteristics of steatite include a low high-frequency loss, high insulation resistance at high temperatures, and high mechanical strength.

Characteristics of cordierite include crystal expansion in the radial direction and contraction in the axial direction upon heating.

Characteristics of sialon include excellent heat resistance, mechanical strength in high-temperature environments, thermal shock resistance, and abrasion resistance, as well as low thermal expansion, high rigidity, and excellent corrosion resistance.

Machinable ceramics are easy to cut and suitable for fine and precision machining. Since machinable ceramics have few pores, outgassing or helium permeation is minimized, allowing them to exhibit stable performance even in a vacuum.

Characteristics of barium titanate include an extremely high dielectric constant. Barium titanate is widely used as a dielectric material in, for example, multilayer ceramic capacitors. Barium titanate also has an extremely high refractive index, and is also used as an optical material.

Characteristics of lead zirconate include a high piezoelectric charge coefficient, a medium dielectric constant, and a high coupling coefficient.

Ferrite is a magnetic material that can provide a strong magnet, is less electrically conductive than metallic magnetic materials, and is resistant to rust and chemicals because it is a baked oxide (porcelain).

Characteristics of mullite include excellent heat resistance, impact resistance, and abrasion resistance, and it can be produced at relatively low cost.

In order to increase the effect of lamination with a barrier material, preferred among the above ceramics are zirconia, aluminum nitride, silicon oxide, forsterite, steatite, cordierite, and sialon, with zirconia, aluminum nitride, and silicon oxide being particularly preferred.

The material (a) preferably has a 1% mass reduction by thermal decomposition, at a temperature (hereinbelow, also referred to as a 1% thermal decomposition temperature) of 560°C or lower.

In order to improve chemical resistance, the upper limit of the 1% thermal decomposition temperature is more preferably 500°C, still more preferably 450°C. The lower limit is not limited. Still, the lower limit is preferably 150°C, more preferably 200°C, still more preferably 250°C.

The 1% thermal decomposition temperature is measured using a thermal analyzer STA7200 available from Hitachi High-Tech Science Corporation. The measurement is carried out under a nitrogen-purged atmosphere at 200 mL/min. A sample in an amount of 10 mg is placed in an aluminum pan and kept at 25°C for 10 minutes, and then heated to 600°C at a temperature-increasing rate of 10°C/min. The temperature at which the mass is reduced by 1% from the initial mass is defined as the 1% thermal decomposition temperature.

The material (a) may be degreased as a pre-cleaning to enhance adhesion, without any limitation. Preferably, the material (a) is wiped with ethanol or isopropyl alcohol or subjected to ultrasonic cleaning. The surface of the material (a) is preferably subjected to, as a pretreatment, roughening by a sandblasting method or the like, a chemical conversion treatment such as alumite treatment, or a plasma treatment or corona treatment. The surface of the material (a) is particularly preferably subjected to a plasma treatment or corona treatment.

In order to enhance adhesion, any known material may be used in the surface treatment of the material (a), without any limitation. Specifically, the treatment can be performed using a silane coupling agent containing a reactive functional group, such as an epoxy silane, an amino silane, an isocyanate silane, a vinyl silane, an acrylic silane, or a hydrophobic silane (e.g., alkyl silane, phenyl silane, fluorinated alkyl silane).

Examples of the silane coupling agent include epoxy silanes such as γ-glycidoxypropyltriethoxysilane and β-(3,4-epoxycyclohexyl)ethyltrimethoxysilane, amino silanes such as aminopropyltriethoxysilane and N-phenylaminopropyltrimethoxysilane, isocyanate silanes such as 3-isocyanatepropyltrimethoxysilane, vinyl silanes such as vinyltrimethoxysilane, and acrylic silanes such as acryloxytrimethoxysilane, with 3-methacryloxypropyltriethoxysilane being preferred.

The member of the disclosure preferably has a tape peel strength of 3 or greater. The tape peel strength indicates adhesion between the material (a) and the aromatic ring-containing barrier material.

The tape peel strength in the disclosure is evaluated by the following method.

Cellotape (registered trademark, tape width: 18 mm, available from Nichiban Co., Ltd.) used in the JIS-K5600 adhesion test (cross-cut method) is used. A 15 mm long cellotape is attached to the barrier material, making sure not to trap air bubbles. The attached cellotape is peeled off at a 90° angle. Using image analysis (Python), the area of the barrier layer peeled off from the barrier material to which the tape has been attached (area: 270 mm²), is calculated and evaluated based on the following criteria.
1: 95% or more of the barrier layer was peeled off.
2: 60% or more but less than 95% of the barrier layer was peeled off.
3: 40% or more but less than 60% of the barrier layer was peeled off.
4: 5% or more but less than 40% of the barrier layer was peeled off.
5: Less than 5% of the barrier layer was peeled off.

The aromatic ring-containing barrier material herein refers to a material containing an aromatic ring therein and having barrier properties. The aromatic content (the proportion of carbon atoms in the molecule that constitute an aromatic ring) of the aromatic ring-containing barrier material is not limited. Still, it is preferably 20% or more, more preferably 35% or more, particularly preferably 55% or more, more particularly preferably 70% or more, while it is preferably 80% or less.

The aromatic content can be determined by calculating the proportion of carbon atoms in the molecule that constitute an aromatic ring from the molecular structure.

The aromatic ring-containing barrier material may be any material capable of forming a coating including the aromatic ring-containing barrier material on the surface of the material.

Examples of the aromatic ring-containing barrier material include compounds represented by the following formulas (a) to (c). The aromatic ring-containing barrier material preferably includes at least one selected from the group consisting of a compound represented by the following formula (a), a compound represented by the following formula (b), and a compound represented by the following formula (c), more preferably a compound represented by the following formula (a).

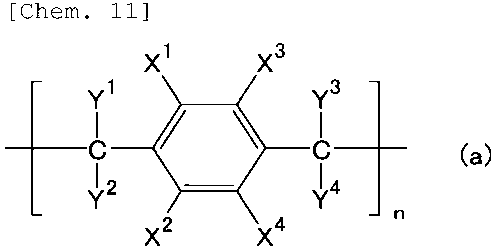

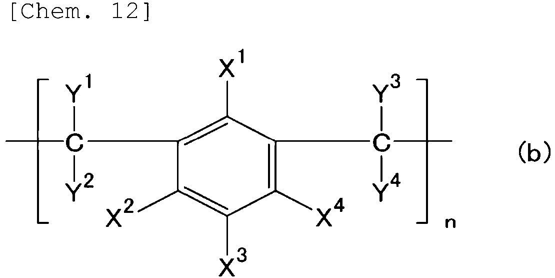

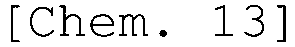

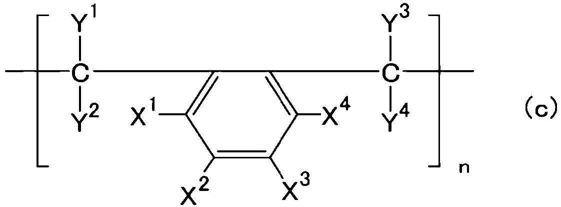

In the formulas, X¹ to X⁴ are each independently hydrogen, a halogen, a monovalent hydrocarbon group, or an optionally fluorinated alkoxy group; Y¹ to Y⁴ are each independently hydrogen or a halogen; and n is an integer of 1 or greater.

Examples of halogens for X¹ to X⁴ and Y¹ to Y⁴ include fluorine (F), chlorine (Cl), bromine (Br), and iodine (I). Fluorine and chlorine are preferred among these.

The monovalent hydrocarbon group for any of X¹ to X⁴ may have a heteroatom such as a nitrogen atom or an oxygen atom. The monovalent hydrocarbon group may be linear, branched, or cyclic. The monovalent hydrocarbon group preferably has a carbon number of 1 to 8, more preferably 1 to 5, still more preferably 1 to 3. Examples of the monovalent hydrocarbon group include alkyl, alkenyl, and alkynyl groups having the above carbon numbers.

The optionally fluorinated alkoxy group for any of X¹ to X⁴ may have a heteroatom such as a nitrogen atom or an oxygen atom. The optionally fluorinated alkoxy group may be linear, branched, or cyclic. The optionally fluorinated alkoxy group preferably has a carbon number of 1 to 8, more preferably 1 to 5, still more preferably 1 to 3. Examples of the optionally fluorinated alkoxy group include an -OCF₃ group and an -OCF₂CF₃ group.

Among hydrogen, halogens, and monovalent hydrocarbon groups for X¹ to X⁴, preferred are hydrogen and halogens, and more preferred are hydrogen, fluorine, and chlorine.

Among hydrogen and halogens for Y¹ to Y⁴, preferred are hydrogen, fluorine, and chlorine.

Examples of the aromatic ring-containing barrier material include compounds represented by the following formulas.

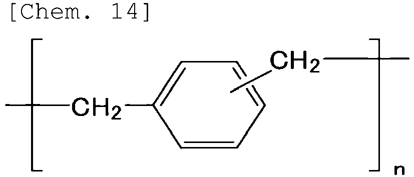

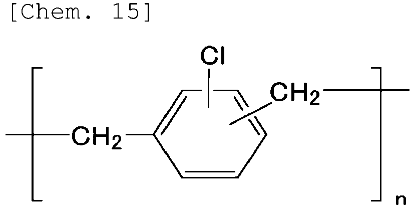

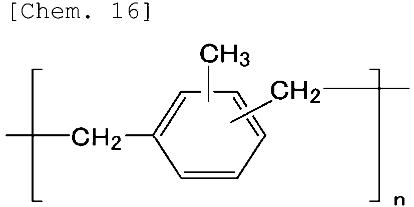

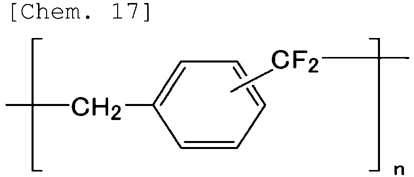

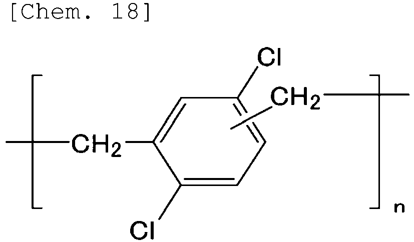

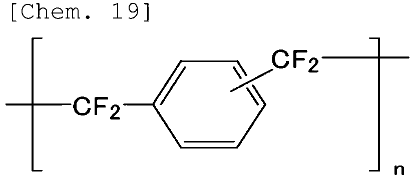

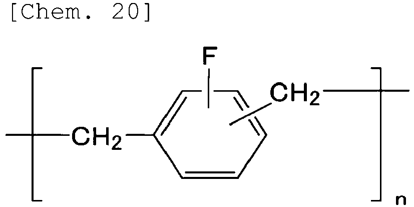

From the viewpoint of chemical resistance, the aromatic ring-containing barrier material is preferably a paraxylylene-based polymer called parylene.

The paraxylylene-based polymer (parylene) includes parylene having no substituent on the benzene ring represented by the following formula (1) (hereinafter also referred to as parylene N), as well as parylene having various functional groups introduced into the benzene ring and parylene in which hydrogen of a methylene group adjacent to the benzene ring is replaced. Specific examples include a polymer having chlorine introduced into the benzene ring represented by the following formula (2) (hereinafter also referred to as parylene C), a polymer having a methyl group introduced into the benzene ring represented by the following formula (3) (hereinafter also referred to as parylene M), a polymer having fluorine introduced into the methylene group represented by the following formula (4) (hereinafter also referred to as parylene F), a polymer having two chlorine atoms introduced into the benzene ring represented by the following formula (5) (hereinafter also referred to as parylene D), a polymer having fluorine introduced into the methylene group represented by the following formula (6) (hereinafter also referred to as parylene HT), and a polymer having fluorine introduced into the benzene ring represented by the following formula (7) (hereinafter also referred to as parylene BF). n is an integer of 1 or greater. Among these, preferred is at least one selected from the group consisting of polyparaxylylene and polyparaxylylene having a halogen introduced into the benzene ring, more preferred is at least one selected from the group consisting of parylene N, parylene C, parylene D, and parylene BF, still more preferred is at least one selected from the group consisting of parylene N, parylene C, and parylene D, further preferred is at least one selected from the group consisting of parylene C and parylene D, and particularly preferred is parylene C.

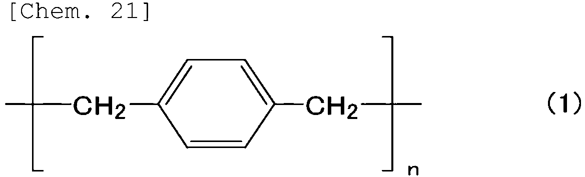

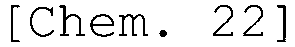

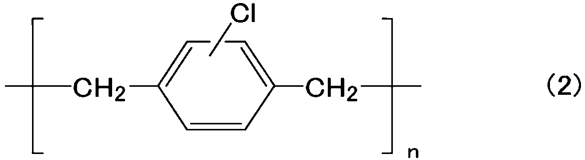

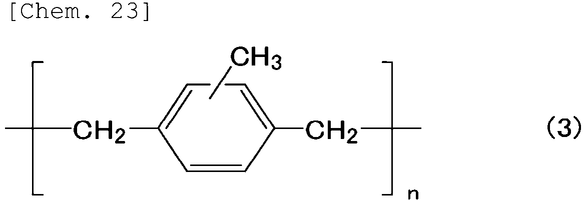

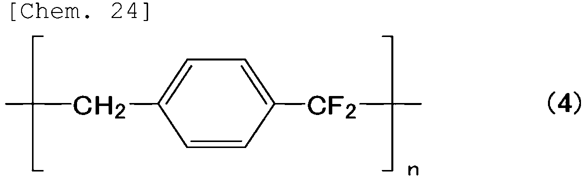

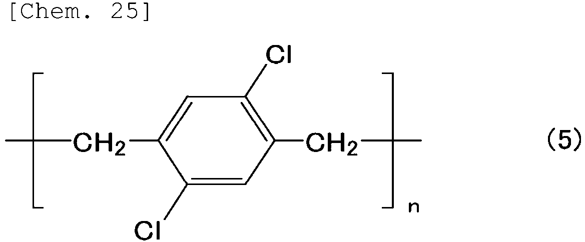

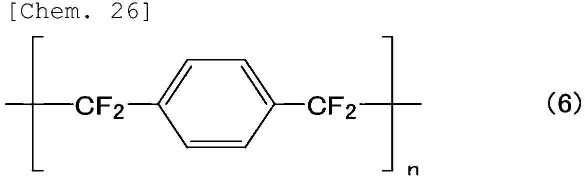

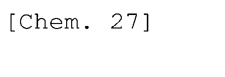

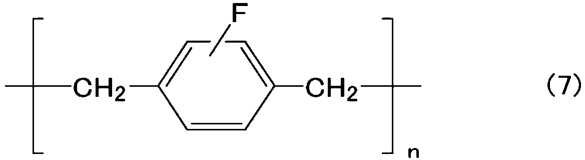

The coating including the aromatic ring-containing barrier material can be formed by a known method for forming a vapor deposition coating.

Such methods include vacuum deposition, sputtering, ion plating, ion vapor deposition (IVD), plasma vapor deposition (CVD), and the like. Of these, CVD, sputtering, ion deposition, and vacuum deposition are preferred.

From the viewpoint of chemical resistance, the coating including the aromatic ring-containing barrier material in the member of the disclosure preferably has a thickness of 0.01 to 100 µm.

The lower limit of the thickness is more preferably 0.1 µm, still more preferably 1 µm.

The upper limit of the thickness is more preferably 75 µm, still more preferably 50 µm.

The coating including the aromatic ring-containing barrier material preferably has an aromatic ring-containing barrier material content in the coating (100% by mass) of 90 to 100% by mass.

The lower limit of the content is more preferably 93% by mass, still more preferably 95% by mass. The upper limit of the content is not limited, and may be 100% by mass.

The coating including the aromatic ring-containing barrier material may be subjected to annealing. Annealing increases the crystallinity of the coating, improving the chemical resistance, cut-through resistance, hardness, and abrasion resistance of the coating. The crystallinity of the coating is measured using an X-ray diffraction device (XRD) under conditions of a tube voltage of 40 kV and a tube current of 40 mA. The peak intensity derived from the barrier material type is observed at 14° to 17°.

Annealing may be performed by any method, and can be performed by heating a test piece in a forced convection constant temperature oven, and may be performed in an air atmosphere, an inert gas atmosphere, or a vacuum atmosphere. The crystallinity can be controlled by controlling the temperature and time of annealing.

The annealing atmosphere is not limited. In order to reduce or prevent deterioration of the barrier film, an inert gas atmosphere or a vacuum atmosphere is preferable, and a nitrogen atmosphere or an argon atmosphere is particularly preferable, rather than an air atmosphere.

The heating time is not limited. In order to increase the crystallinity, the heating time is preferably from 10 seconds to three hours, more preferably from 30 seconds to 2.5 hours, particularly preferably from one hour to two hours.

The heating temperature is not limited. In order to increase the crystallinity, the heating temperature is preferably 50°C to 300°C, more preferably 80°C to 250°C, particularly preferably 100°C to 210°C.

The member of the disclosure is for use as at least one selected from the group consisting of an architectural finishing material member, a mobility member, an aerospace member, a semiconductor member, and an information and communication member. From the viewpoint of excellent chemical resistance, the member is preferably a semiconductor member, more preferably a member for a semiconductor manufacturing-related apparatus (an article for a semiconductor manufacturing apparatus).

Examples of the architectural finishing material member include architectural interior finishing materials such as baseboards, ceiling materials, and plumbing materials, and architectural exterior finishing materials such as waterproof sheets, waterproofing materials, exterior wall materials, and roofing materials.

Examples of the mobility member include parts used in ferries, trains, automobiles, motorcycles, drones, robots, etc.

Examples of the aerospace member include exterior and interior materials for aircraft, rockets, etc., wire covering members, cable protection members, jet engines, cabin interior materials, and parts thereof.

Examples of the semiconductor member include process materials used in semiconductor manufacturing, and parts for a semiconductor manufacturing-related apparatus.

Examples of the information and communication member include parts of apparatuses such as wireless LAN transmitting and receiving circuits, circuit boards, and parts of apparatuses for optical communication.

The member of the disclosure can be suitably applied to at least one selected from the group consisting of piping materials, nozzles, tubes, tanks, containers, joints, valves, pumps, spin chucks, O-rings, packings, gaskets, washers, and sealing materials because these all require chemical resistance. In particular, the member of the disclosure can be suitably used for the above-mentioned piping materials, nozzles, tubes, and the like in a semiconductor manufacturing-related apparatus.

The piping material is not limited. Examples of the shape of the material include a robust pipe, a flexible hose that can be fitted to the installation space, and a bellows pipe that is large in diameter but can be bent. The inside of the piping material may be highly polished so as not to generate dust or disturb a liquid or gas flow.

The nozzle is not limited. The tip of the nozzle may be precisely machined to match the size and shape of the part. In addition, since the nozzle comes into contact with another part, a highly hard and durable material that is resistant to friction and bending can be used.

The tube is not limited. The tube diameter is preferably 2 mm to 400 mm, more preferably 2 mm to 100 mm, particularly preferably 2 mm to 25 mm. Materials having stress crack resistance, chemical resistance, excellent mechanical strength, and cleanliness (low contamination of chemical solutions by extracted ions) are used.

The tank and container are not limited. They may be subjected to precision cleaning (washing with water, immersion in acetic acid, wiping, washing with pure water, etc.) to remove dirt or residue. Packaging after cleaning may be carried out in a clean room or clean booth environment.

The joint and valve are not limited. They are required to be oil-free, particle-free, dead space-free, and external leakage-free, and have a size preferably in the range of 3.2 to 40.0 mm in diameter, more preferably in the range of 3.2 to 12.7 mm in diameter.

The pump is not limited. It may be required to have retractability.

The spin chuck is not limited. It may be required to have hardness, corrosion resistance, and dimensional stability, and may be provided with electrical conductivity.

The O-ring and sealing material are not limited. The material thereof may be required to have properties including excellent elasticity, good compression set, high abrasion resistance, excellent heat resistance, resistance to the liquid or gas to be used, and long life. In particular, an O-ring used in a semiconductor manufacturing apparatus is used in harsh chemical environments, such as being exposed to various plasmas, and therefore may be required to have high heat resistance, chemical resistance, and plasma resistance.

The packing and gasket are not limited. They may be required to have a low coefficient of friction and excellent abrasion resistance. They may also be required to have heat resistance, cold resistance, pressure resistance, and chemical resistance to prevent leakage.

The washer is not limited. It may be required to have durability, corrosion resistance, and rust resistance, assuming its use in, for example, a clean room.

Examples of a semiconductor manufacturing apparatus of the semiconductor manufacturing-related apparatus include photolithography process apparatuses (coating apparatuses, resist stripping apparatuses, developing apparatuses (developers), baking apparatuses, descumming apparatuses), thin film formation/etching/cleaning/drying apparatuses (vacuum deposition apparatuses, sputtering apparatuses, CVD apparatuses, cleaning apparatuses, etching apparatuses, drying apparatuses, scrub cleaning apparatuses), inspection/evaluation and manufacturing apparatuses (defect repair apparatuses), wafer processing apparatuses (wafer marking apparatuses), resist processing apparatuses (coating apparatuses, developing apparatuses, resist stripping apparatuses, ashing apparatuses, baking apparatuses), etching apparatuses (dry etching apparatuses, wet etching apparatuses), cleaning/drying apparatuses (dry cleaning apparatuses, wet cleaning apparatuses, scrub cleaning apparatuses, drying apparatuses), heat treatment apparatuses (oxidation apparatuses, diffusion apparatuses, annealing apparatuses), ion implantation apparatuses (high current ion implantation apparatuses, medium current ion implantation apparatuses, high energy ion implantation apparatuses), thin film formation apparatuses, CVD apparatuses (high-pressure CVD apparatuses, SACVD apparatuses, low-pressure CVD apparatuses, plasma CVD apparatuses, metal CVD apparatuses, ALD apparatuses), sputtering apparatuses, other thin film formation apparatuses (vacuum deposition apparatuses, silicon epitaxial growth apparatuses, compound semiconductor epitaxial apparatuses (MOCVD apparatuses, MBE apparatuses), plating apparatuses), inspection/evaluation apparatuses (Auger electron spectroscopy apparatuses), CMP apparatuses (CMP apparatuses, CMP cleaning apparatuses), other processing apparatuses (wafer marking apparatuses, back grinding machines, bump plating apparatuses, back grinder tape applicators, back grinders, back grinder tape peelers), dicing apparatuses (dicing apparatuses, wafer mounting apparatuses), bonding apparatuses (die bonding apparatuses, hybrid bonding apparatuses, wire bonding apparatuses, inner lead bonding apparatuses, outer lead bonding apparatuses, flip chip bonding apparatuses), packaging apparatuses (molding apparatuses, deburring apparatuses, solder processing apparatuses), other testing apparatuses (electron beam testing apparatuses, laser beam testing apparatuses), probing apparatuses (probers), handlers, aging apparatuses (aging apparatuses, burn-in apparatuses, IC insertion apparatuses, IC extraction apparatuses), and other inspection apparatuses (thermal test apparatuses, temperature and humidity test apparatuses, pressure cooker apparatuses, laser processing systems, various life test apparatuses).

Examples of a semiconductor manufacturing apparatus-related apparatus include various transport apparatuses (intra-process wafer transport apparatuses, inter-process wafer transport apparatuses, stockers), pure water/chemical liquid apparatuses (pure water production apparatuses, ultrafiltration apparatuses, reverse osmosis apparatuses, sterilization apparatuses, chemical supply apparatuses, slurry supply apparatuses, chemical purification apparatuses, waste liquid treatment apparatuses), various gas apparatuses (gas generation apparatuses, gas purification apparatuses, gas mixing apparatuses, gas detection apparatuses, exhaust gas treatment apparatuses), clean room apparatuses (clean benches, clean tunnels, thermal chambers, environmental test apparatuses, air showers, pass boxes), and other manufacturing-related apparatuses (various jig cleaning/drying apparatuses, flow control instruments, various taping apparatuses, various packaging apparatuses, measuring instruments for liquid/various gases).

Among these, preferred examples of a semiconductor manufacturing apparatus that utilizes the properties of paraxylylene-based polymers (parylene) include thin film formation/etching/cleaning/drying apparatuses (vacuum deposition apparatuses, sputtering apparatuses, CVD apparatuses, cleaning apparatuses, etching apparatuses, drying apparatuses, scrub cleaning apparatuses), inspection/evaluation and manufacturing apparatuses (defect repair apparatuses), wafer processing apparatuses (wafer marking apparatuses), resist processing apparatuses (coating apparatuses, developing apparatuses, resist stripping apparatuses, ashing apparatuses, baking apparatuses), etching apparatuses (dry etching apparatuses, wet etching apparatuses), cleaning/drying apparatuses (dry cleaning apparatuses, wet cleaning apparatuses, scrub cleaning apparatuses, drying apparatuses), heat treatment apparatuses (oxidation apparatuses, diffusion apparatuses, annealing apparatuses), thin film formation apparatuses, CVD apparatuses (high-pressure CVD apparatuses, SACVD apparatuses, low-pressure CVD apparatuses, metal CVD apparatuses, ALD apparatuses), sputtering apparatuses, other thin film formation apparatuses (vacuum deposition apparatuses, compound semiconductor epitaxial apparatuses (MOCVD apparatuses, MBE apparatuses), plating apparatuses), inspection/evaluation apparatuses (Auger electron spectroscopy apparatuses), other processing apparatuses (wafer marking apparatuses, back grinding machines, bump plating apparatuses, back grinder tape applicators, back grinders, back grinder tape peelers), dicing apparatuses (dicing apparatuses, wafer mounting apparatuses), bonding apparatuses (die bonding apparatuses, hybrid bonding apparatuses, wire bonding apparatuses, inner lead bonding apparatuses, outer lead bonding apparatuses, flip chip bonding apparatuses), packaging apparatuses (molding apparatuses, deburring apparatuses, solder processing apparatuses), other testing apparatuses (electron beam testing apparatuses, laser beam testing apparatuses), probing apparatuses (probers), handlers, aging apparatuses (aging apparatuses, burn-in apparatuses, IC insertion apparatuses, IC extraction apparatuses), and other inspection apparatuses (thermal test apparatuses, temperature and humidity test apparatuses, pressure cooker apparatuses, laser processing systems, various life test apparatuses).

Preferred examples of an apparatus related to a semiconductor manufacturing apparatus include various transport apparatuses (stockers), pure water/chemical liquid apparatuses (pure water production apparatuses, ultrafiltration apparatuses, reverse osmosis apparatuses, sterilization apparatuses, chemical supply apparatuses, slurry supply apparatuses, chemical purification apparatuses, waste liquid treatment apparatuses), various gas apparatuses (gas generation apparatuses, gas purification apparatuses, gas mixing apparatuses, gas detection apparatuses, exhaust gas treatment apparatuses), clean room apparatuses (clean benches, clean tunnels, environmental test apparatuses, air showers, pass boxes), and other manufacturing-related apparatuses (various jig cleaning/drying apparatuses, flow control instruments, various taping apparatuses, various packaging apparatuses, measuring instruments for liquid/various gases).

In order to take advantage of chemical resistant properties achieved by lamination with a paraxylylene-based polymer (parylene), particularly preferred examples of a semiconductor manufacturing apparatus include thin film formation/etching/cleaning/drying apparatuses (vacuum deposition apparatuses, CVD apparatuses, cleaning apparatuses, etching apparatuses, drying apparatuses, scrub cleaning apparatuses), inspection/evaluation apparatuses, resist processing apparatuses (coating apparatuses, developing apparatuses, resist stripping apparatuses, ashing apparatuses), etching apparatuses (dry etching apparatuses, wet etching apparatuses), cleaning/drying apparatuses (wet cleaning apparatuses, scrub cleaning apparatuses, drying apparatuses), CVD apparatuses (high-pressure CVD apparatuses, SACVD apparatuses, low-pressure CVD apparatuses, metal CVD apparatuses, ALD apparatuses), plating apparatuses, bump plating apparatuses, and other inspection apparatuses (various life test apparatuses).

Particularly preferred examples of an apparatus related to a semiconductor manufacturing apparatus include pure water/chemical liquid apparatuses (slurry supply apparatuses, chemical purification apparatuses, waste liquid treatment apparatuses), various gas apparatuses (gas generation apparatuses, gas purification apparatuses, gas mixing apparatuses, gas detection apparatuses, exhaust gas treatment apparatuses), clean room apparatuses (environmental test apparatuses), and other manufacturing-related apparatuses (various jig cleaning/drying apparatuses, flow control instruments, various packaging apparatuses, measuring instruments for liquid/various gases).

In order to take advantage of flexible properties achieved by lamination with a paraxylylene-based polymer (parylene), more preferred examples of a semiconductor manufacturing apparatus include thin film formation/etching/cleaning/drying apparatuses (vacuum deposition apparatuses, sputtering apparatuses, CVD apparatuses, cleaning apparatuses, etching apparatuses, drying apparatuses, scrub cleaning apparatuses), inspection/evaluation and manufacturing apparatuses (defect repair apparatuses), resist processing apparatuses (coating apparatuses, developing apparatuses, resist stripping apparatuses, ashing apparatuses), etching apparatuses (dry etching apparatuses, wet etching apparatuses), cleaning/drying apparatuses (wet cleaning apparatuses, scrub cleaning apparatuses, drying apparatuses), CVD apparatuses (high-pressure CVD apparatuses, SACVD apparatuses, low-pressure CVD apparatuses, metal CVD apparatuses, ALD apparatuses), plating apparatuses, bump plating apparatuses, and other inspection apparatuses (thermal test apparatuses, temperature and humidity test apparatuses, pressure cooker apparatuses, laser processing systems, various life test apparatuses).

More preferred examples of an apparatus related to a semiconductor manufacturing apparatus include pure water/chemical liquid apparatuses (slurry supply apparatuses, chemical purification apparatuses, waste liquid treatment apparatuses), various gas apparatuses (gas generation apparatuses, gas purification apparatuses, gas mixing apparatuses, gas detection apparatuses, exhaust gas treatment apparatuses), clean room apparatuses (environmental test apparatuses), and other manufacturing-related apparatuses (various jig cleaning/drying apparatuses, flow control instruments, various packaging apparatuses, measuring instruments for liquid/various gases).

As described above, the member of the disclosure can be suitably used as a member for a semiconductor manufacturing-related apparatus (an article for a semiconductor manufacturing-related apparatus). Owing to its excellent chemical resistance, the member of the disclosure is more suitably used as a member constituting a semiconductor manufacturing-related apparatus in which a chemical is used.

The chemical is not limited. Examples thereof include chemicals used in semiconductor manufacturing-related apparatuses. One chemical may be used alone or two or more chemicals may be used in combination.

Specific examples of the chemical include at least one selected from the group consisting of TMAH ([(CH₃)₄N]⁺[OH]⁻), sulfuric acid, isopropyl alcohol, hydrofluoric acid, a mixed acid of hydrofluoric acid and nitric acid, a sulfuric acid hydrogen peroxide mixture (SPM), SC1 (a mixture of NH₄OH, H₂O₂, and H₂O), SC2 (a mixture of HCl, H₂O₂, and H₂O), phosphoric acid, and hydrochloric acid. Preferred among these is at least one selected from the group consisting of TMAH ([(CH₃)₄N]⁺[OH]⁻), sulfuric acid, isopropyl alcohol, hydrofluoric acid, a mixed acid of hydrofluoric acid and nitric acid, a sulfuric acid hydrogen peroxide mixture (SPM), SC1 (a mixture of NH₄OH, H₂O₂, and H₂O), SC2 (a mixture of HCl, H₂O₂, and H₂O), phosphoric acid, and hydrochloric acid. Preferred is a mixed acid of hydrofluoric acid and nitric acid, hydrofluoric acid, or SPM, and more preferred is a mixed acid of hydrofluoric acid and nitric acid or SPM.

The chemical may also include at least one selected from the group consisting of silicon-based gases, arsenic-based gases, phosphorus-based gases, boron-based gases, metal hydride gases, metal alkyl gases, halogenated hydrocarbon gases, halogen-halide gases, nitrogen oxide gases, hydrogen sulfide gas, ammonia gas, trimethylamine gas, propane gas, trimethylaluminum gas, hydrogen gas, helium gas, nitrogen gas, oxygen gas, argon gas, and carbon dioxide gas. The chemical may also preferably include at least one selected from the group consisting of silicon-based gases, arsenic-based gases, phosphorus-based gases, boron-based gases, metal hydride gases, metal alkyl gases, halogenated hydrocarbon gases, halogen-halide gases, nitrogen oxide gases, hydrogen sulfide gas, ammonia gas, trimethylamine gas, propane gas, trimethylaluminum gas, hydrogen gas, helium gas, nitrogen gas, oxygen gas, argon gas, and carbon dioxide gas.

Examples of the silicon-based gases include monosilane, dichlorosilane, trichlorosilane, silicon tetrachloride, silicon tetrafluoride, and disilane.

Examples of the arsenic-based gases include arsine, arsenic (III) fluoride, arsenic (V) fluoride, arsenic (III) chloride, and arsenic (V) chloride.

Examples of the phosphorus-based gases include phosphine, phosphorus (III) fluoride, phosphorus (V) fluoride, phosphorus (III) chloride, phosphorus (V) chloride, and phosphorus oxychloride.

Examples of the boron-based gases include diborane, boron trifluoride, boron trichloride, and boron tribromide.

Examples of the metal hydride gases include hydrogen selenide, monogermane, hydrogen telluride, stibine, and tin hydride.

Examples of the metal alkyl gases include trialkylgallium and trialkylindium.

Examples of the halogenated hydrocarbon gases include tetrafluoromethane, trifluoromethane, difluoromethane, hexafluoropropane, octafluoropropane, and octafluorocyclobutane.

Examples of the halogen-halide gases include fluorine, hydrogen fluoride, chlorine, hydrogen chloride, carbon tetrachloride, hydrogen bromide, sulfur hexafluoride, nitrogen trifluoride, sulfur tetrafluoride, tungsten (VI) fluoride, molybdenum (VI) fluoride, germanium tetrachloride, tin (IV) chloride, antimony (V) chloride, tungsten (VI) chloride, and molybdenum hexachloride.

Examples of the nitrogen oxide gases include nitrogen monoxide, nitrogen dioxide, and dinitrogen monoxide.

Preferred among these are ammonia gas, nitrogen trifluoride, dinitrogen monoxide, monosilane, and octafluorocyclobutane, and more preferred are ammonia gas, nitrogen trifluoride, and dinitrogen monoxide.

In order to ensure chemical resistance, the surface of the member for a semiconductor manufacturing-related apparatus (article for a semiconductor manufacturing-related apparatus) that comes into contact with the chemical is preferably at least partially laminated with the aromatic ring-containing barrier material. More preferably, the surface of the member for a semiconductor manufacturing-related apparatus that comes into contact with the chemical is entirely laminated with the aromatic ring-containing barrier material.

In terms of chemical resistance, the member of the disclosure preferably has a mass change rate of 70.0% by mass or less in the following chemical resistance evaluation.

### (Chemical resistance evaluation)

A test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours.

After drying, the mass of the test piece before immersion is measured at room temperature (20°C).

The test piece after the measurement is completely immersed in a mixed acid of hydrofluoric acid and nitric acid (hydrofluoric acid concentration 50%, nitric acid concentration 60%) having a concentration ratio (molar ratio) of hydrofluoric acid to nitric acid of 1:5 or a mixed acid of hydrofluoric acid and nitric acid (hydrofluoric acid concentration 50%, nitric acid concentration 60%) having a concentration ratio (molar ratio) of hydrofluoric acid to nitric acid of 1:100, and held at room temperature (20°C) for one day (24 hours) or one week (168 hours).

The test piece after the holding is washed with pure water, wiped to remove water droplets on the surface, and dried at 60°C for 12 hours, and the mass of the test piece after the immersion is measured at room temperature (20°C).

The mass change rate (%) is calculated from the masses measured before and after the immersion.

The upper limit of the mass change rate is more preferably 20% by mass, still more preferably 10% by mass, further preferably 5% by mass. The lower limit is not limited. Still, 0% by mass is most preferred.

In terms of chemical resistance, the member of the disclosure preferably has a mass change rate of 70.0% by mass or less in the following chemical resistance evaluation.

### (Chemical resistance evaluation)

A test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours.

After drying, the mass of the test piece before immersion is measured at room temperature (20°C).

The test piece after the measurement is completely immersed in SPM (concentrated sulfuric acid and hydrogen peroxide solution in a volume ratio of 2:1) and held at room temperature (20°C) for one day (24 hours).

The test piece after the holding is washed with pure water, wiped to remove water droplets on the surface, and dried at 60°C for 12 hours. The mass of the test piece after the immersion is measured at room temperature (20°C).

The mass change rate (%) is calculated from the masses measured before and after the immersion.

The upper limit of the mass change rate is more preferably 20% by mass, still more preferably 10% by mass, further preferably 5% by mass. The lower limit is not limited. Still, 0% by mass is most preferred.

In terms of chemical resistance, the member of the disclosure preferably has a mass change rate of 70.0% by mass or less in the following chemical resistance evaluation.

### (Chemical resistance evaluation)

A test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours.

After drying, the mass of the test piece before immersion is measured at room temperature (20°C).

The test piece after the measurement is completely immersed in concentrated sulfuric acid (98%) and held at 90°C for one week (168 hours).

The test piece after the holding is washed with pure water, wiped to remove water droplets on the surface, and dried at 60°C for 12 hours. The mass of the test piece after the immersion is measured at room temperature (20°C).

The test piece after the holding is washed with pure water, wiped to remove water droplets on a surface, and dried at 60°C for 12 hours. The mass of the test piece after the immersion is measured at room temperature (20°C).

The mass change rate (%) is calculated from the masses measured before and after the immersion.

The upper limit of the mass change rate is more preferably 20% by mass, still more preferably 10% by mass, further preferably 5% by mass. The lower limit is not limited. Still, 0% by mass is most preferred.

In terms of chemical resistance, the member of the disclosure preferably has a mass change rate of 70.0% by mass or less in the following chemical resistance evaluation.

### (Chemical resistance evaluation)

A test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours.

After drying, the mass of the test piece before immersion is measured at room temperature (20°C).

The test piece after the measurement is completely immersed in TMAH ([(CH₃)₄N]⁺[OH]⁻) (25% concentration) at 80°C and held for one week (168 hours).

The test piece after the measurement is completely immersed in concentrated sulfuric acid (98%) and held at 90°C for one week (168 hours).

The test piece after the holding is washed with pure water, wiped to remove water droplets on a surface, and dried at 60°C for 12 hours. The mass of the test piece after the immersion is measured at room temperature (20°C).

The test piece after the holding is washed with pure water, wiped to remove water droplets on the surface, and dried at 60°C for 12 hours. The mass of the test piece after the immersion is measured at room temperature (20°C).

The mass change rate (%) is calculated from the masses measured before and after the immersion.

The upper limit of the mass change rate is more preferably 10% by mass, still more preferably 5% by mass, further preferably 1% by mass. The lower limit is not limited. Still, 0% by mass is most preferred.

The member of the disclosure including a material (a) with a surface at least partially laminated with an aromatic ring-containing barrier material can be produced by a production method including a step of forming a coating including the aromatic ring-containing barrier material on the surface of the material (a) by, for example, the aforementioned method such as CVD, sputtering, ion deposition, or vacuum deposition. In the production method, a parylene film or the like can be formed by the aforementioned method such as CVD, sputtering, ion deposition, or vacuum deposition. The disclosure also relates to a method for producing the member at a temperature equal to or lower than the temperature at which the material (a) has a 1% mass reduction by thermal decomposition. The production method of the disclosure preferably includes a step of coating the surface of the material (a) with the aromatic ring-containing barrier material by CVD, sputtering, ion deposition, or vacuum deposition.

The semiconductor manufacturing-related apparatus of the disclosure is preferably a semiconductor manufacturing-related apparatus including the member mounted thereon. Use of the member of the disclosure can provide the apparatus with excellent chemical resistance.

The semiconductor manufacturing-related apparatus of the disclosure is preferably the one described above as the semiconductor manufacturing apparatus and related apparatus of the semiconductor manufacturing-related apparatus. Moreover, the semiconductor manufacturing-related apparatus of the disclosure preferably includes at least one selected from the group consisting of semiconductor manufacturing apparatuses and semiconductor manufacturing apparatus-related apparatuses.

The semiconductor manufacturing apparatus preferably includes at least one selected from the group consisting of a thin film formation/etching/cleaning/drying apparatus, an inspection/evaluation and manufacturing apparatus, a wafer processing apparatus, a resist processing apparatus, an etching apparatus, a cleaning/drying apparatus, a heat treatment apparatus, a CVD apparatus, a sputtering apparatus, a thin film formation apparatus, an inspection/evaluation apparatus, a processing apparatus, a dicing apparatus, a bonding apparatus, a packaging apparatus, a testing apparatus, a probing apparatus, a handler, an aging apparatus, and an inspection apparatus.

The semiconductor manufacturing apparatus-related apparatus preferably includes at least one selected from the group consisting of a transport apparatus, a pure water/chemical liquid apparatus, a gas apparatus, a clean room apparatus, and a manufacturing-related apparatus.

The thin film formation/etching/cleaning/drying apparatus preferably includes at least one selected from the group consisting of a vacuum deposition apparatus, a sputtering apparatus, a cleaning apparatus, a drying apparatus, and a scrub cleaning apparatus.

The inspection/evaluation and manufacturing apparatus is preferably a defect repair apparatus.

The wafer processing apparatus is preferably a wafer marking apparatus.

The resist processing apparatus preferably includes at least one selected from the group consisting of a coating apparatus, a developing apparatus, a resist stripping apparatus, an ashing apparatus, and a baking apparatus.

The etching apparatus preferably includes at least one selected from the group consisting of a dry etching apparatus and a wet etching apparatus.

The cleaning/drying apparatus preferably includes at least one selected from the group consisting of a dry cleaning apparatus, a wet cleaning apparatus, a scrub cleaning apparatus, and a drying apparatus.

The heat treatment apparatus preferably includes at least one selected from the group consisting of an oxidation apparatus, a diffusion apparatus, and an annealing apparatus.

The CVD apparatus preferably includes at least one selected from the group consisting of a high-pressure CVD apparatus, a SACVD apparatus, a low-pressure CVD apparatus, a metal CVD apparatus, and an ALD apparatus.

The thin film formation apparatus preferably includes at least one selected from the group consisting of a vacuum deposition apparatus, a compound semiconductor epitaxial apparatus (MOCVD apparatus, MBE apparatus), and a plating apparatus.

The inspection/evaluation apparatus is preferably an Auger electron spectroscopy apparatus.

The processing apparatus preferably includes at least one selected from the group consisting of a wafer marking apparatus, a back grinding machine, a bump plating apparatus, a back grinder tape applicator, a back grinder, and a back grinder tape peeler.

The dicing apparatus preferably includes at least one selected from the group consisting of a dicing apparatus and a wafer mounting apparatus.

The bonding apparatus preferably includes at least one selected from the group consisting of a die bonding apparatus, a hybrid bonding apparatus, a wire bonding apparatus, an inner lead bonding apparatus, an outer lead bonding apparatus, and a flip chip bonding apparatus.

The packaging apparatus preferably includes at least one selected from the group consisting of a molding apparatus, a deburring apparatus, and a soldering apparatus.

The testing apparatus preferably includes at least one selected from the group consisting of an electron beam testing apparatus and a laser beam testing apparatus.

The probing apparatus is preferably a prober.

The aging apparatus includes at least one selected from the group consisting of an aging apparatus, a burn-in apparatus, an IC insertion apparatus, and an IC extraction apparatus.

The inspection apparatus preferably includes at least one selected from the group consisting of a thermal test apparatus, a temperature and humidity test apparatus, a pressure cooker apparatus, a laser processing system, and a life test apparatus.

The transport apparatus is preferably a stocker.

The pure water/chemical liquid apparatus preferably includes at least one selected from the group consisting of a pure water production apparatus, an ultrafiltration apparatus, a reverse osmosis apparatus, a sterilization apparatus, a chemical supply apparatus, a slurry supply apparatus, a chemical purification apparatus, and a waste liquid treatment apparatus.

The gas apparatus preferably includes at least one selected from the group consisting of a gas generation apparatus, a gas purification apparatus, a gas mixing apparatus, a gas detection apparatus, and an exhaust gas treatment apparatus.

The clean room apparatus preferably includes at least one selected from the group consisting of a clean bench, a clean tunnel, an environmental test apparatus, an air shower, and a pass box.

The manufacturing-related apparatus preferably includes at least one selected from the group consisting of a jig cleaning/drying apparatus, a flow control instrument, a taping apparatus, a packaging apparatus, and a liquid/gas measuring instrument.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

Physical properties were measured by the following methods.

### <Aromatic content>

The aromatic content was determined by calculating the proportion of carbon atoms in the molecule that constitute an aromatic ring based on the molecular structure.

### <Tape peel strength measurement>

Cellotape (registered trademark, tape width: 18 mm, available from Nichiban Co., Ltd.) used in the JIS-K5600 adhesion test (cross-cut method) was used. A 15 mm long cellotape was attached to the barrier material, making sure not to trap air bubbles. The attached cellotape was peeled off at a 90° angle. Using image analysis (Python), the area of the barrier layer peeled off from the barrier material to which the tape had been attached (area: 270 mm²) was calculated and evaluated based on the following criteria.
1: 95% or more of the barrier layer was peeled off.
2: 60% or more but less than 95% of the barrier layer was peeled off.
3: 40% or more but less than 60% of the barrier layer was peeled off.
4: 5% or more but less than 40% of the barrier layer was peeled off.
5: Less than 5% of the barrier layer was peeled off.

### <Chemical resistance evaluation 1-1>

In the chemical resistance evaluation 1-1, the chemical resistance to acidic chemicals was evaluated under the test conditions shown in Table 1 by the following method.

A test piece was dried at 60°C for two hours.

After drying, the mass of the test piece before immersion was measured at room temperature (20°C).

The test piece after the measurement was completely immersed in a mixed acid of hydrofluoric acid and nitric acid (hydrofluoric acid concentration 50%, nitric acid concentration 60%) having a concentration ratio (molar ratio) of hydrofluoric acid to nitric acid of 1:5 or a mixed acid of hydrofluoric acid and nitric acid (hydrofluoric acid concentration 50%, nitric acid concentration 60%) having a concentration ratio (molar ratio) of hydrofluoric acid to nitric acid of 1:100, and held at room temperature (20°C) for one day (24 hours) or one week (168 hours).

The test piece after the holding was washed with pure water, wiped to remove water droplets on the surface, and dried at 60°C for 12 hours. The mass of the test piece after the immersion was measured at room temperature (20°C).

The mass change rate (%) was calculated from the masses measured before and after the immersion.

### <Chemical resistance evaluation 1-2>

In the chemical resistance evaluation 1-2, chemical resistance to acidic chemicals was evaluated under the test conditions shown in Table 1 by the following method.

A test piece was dried at 60°C for two hours.

After drying, the mass of the test piece before immersion was measured at room temperature (20°C).

The test piece after the measurement was completely immersed in SPM (concentrated sulfuric acid and hydrogen peroxide solution in a volume ratio of 2:1) and held at room temperature (20°C) for one day (24 hours).

The test piece after the holding was washed with pure water, wiped to remove water droplets on the surface, and dried at 60°C for 12 hours. The mass of the test piece after the immersion was measured at room temperature (20°C).

The mass change rate (%) was calculated from the masses measured before and after the immersion.

### <Chemical resistance evaluation 1-3>

In the chemical resistance evaluation 1-3, chemical resistance to acidic chemicals was evaluated under the test conditions shown in Table 1 by the following method.

A test piece was dried at 60°C for two hours.

After drying, the mass of the test piece before immersion was measured at room temperature (20°C).

The test piece after the measurement was completely immersed in concentrated sulfuric acid (98%) and held at 90°C for one week (168 hours).

The test piece after the holding was washed with pure water, wiped to remove water droplets on the surface, and dried at 60°C for 12 hours. The mass of the test piece after the immersion was measured at room temperature (20°C).

The mass change rate (%) was calculated from the masses measured before and after the immersion.

### <Chemical resistance evaluation 2>

In the chemical resistance evaluation 2, chemical resistance to basic chemicals was evaluated under the test conditions shown in Table 1 by the following method.

A test piece was dried at 60°C for two hours.

After drying, the mass of the test piece before immersion was measured at room temperature (20°C).

The test piece after the measurement was completely immersed in TMAH ([(CH₃)₄N]⁺[OH]⁻) (25% concentration) at 80°C and held for one week (168 hours).

The test piece after the holding was washed with pure water, wiped to remove water droplets on the surface, and dried at 60°C for 12 hours. The mass of the test piece after the immersion was measured at room temperature (20°C).

The mass change rate (%) was calculated from the masses measured before and after the immersion.

The materials (a) (substrates) and barrier materials used in the examples and comparative examples are shown below.

### (Material (a))

PPS: polyphenylene sulfide, MFR 125 g/10 min, shape: 10 mm × 50 mm × 6 mm, 1% thermal decomposition temperature 473°C.

PEI: polyetherimide, MFR 45 g/10 min, shape: 10 mm × 50 mm × 2 mm, 1% thermal decomposition temperature 455°C.

PEEK: polyether ether ketone, MFR 20 g/10 min, shape: 10 mm × 50 mm × 2 mm, 1% thermal decomposition temperature 554°C.

### (Barrier Materials)

Barrier material 1: Parylene C (aromatic content: 75%) available from Parylene Japan, LLC
Barrier material 2: Parylene N (aromatic content: 75%) available from Parylene Japan, LLC
Barrier material 3: Parylene D (aromatic content: 75%) available from Parylene Japan, LLC

### Examples 1, 2, 4, 5, 7, 8, 10, 11, 13, and 14

PPS was coated with Barrier material 1 (Parylene C) by vacuum deposition according to the conditions in Table 1 to obtain a test piece (laminated member).

### Examples 3, 6, 9, 12, and 15

PPS was coated with Barrier material 2 (Parylene N) by vacuum deposition according to the conditions in Table 1 to obtain a test piece (laminated member).

### Examples 22 to 25

PEI was coated with one of Barrier materials 1 to 3 by vacuum deposition according to the conditions in Table 1 to obtain a test piece (laminated member).

### Example 29

PEEK was coated with Barrier material 3 (Parylene D) by vacuum deposition according to the conditions in Table 1 to obtain a test piece (laminated member).

### Examples 16 to 21, 26 to 28, and 30 to 32

A substrate (PPS, PEEK, or PEI) was coated with one of Barrier materials 1 to 3 by vacuum deposition according to the conditions in Table 1 to obtain a laminated member. The laminated member was then annealed in an air atmosphere in a forced convection constant temperature oven (DKN602, available from Yamato Scientific Co., Ltd.) at the specified temperature and time shown in Table 1, then taken out from the oven and cooled at room temperature to obtain a test piece (annealed laminated member).

In order to evaluate the crystallinity of each type of the barrier materials, the measurement was performed using an X-ray diffraction (XRD) device (device model: SmartLab available from Rigaku Holdings Corporation) under conditions of a tube voltage of 40 kV and a tube current of 40 mA. The peak intensity derived from the barrier material type was observed at 14° to 17°.

### <Peak intensity (cps)>

Barrier material 1 (Parylene C): 38000
Barrier material 1-A (Parylene C, annealed at 210°C for two hours): 375000
Barrier material 1-B (Parylene C, annealed at 150°C for one hour): 178000
Barrier material 1-C (Parylene C, annealed at 100°C for one hour): 122000
Barrier material 2 (Parylene N): 111000
Barrier material 2-A (Parylene N, annealed at 210°C for two hours): 243000
Barrier material 2-B (Parylene N, annealed at 150°C for one hour): 200000
Barrier material 2-C (Parylene N, annealed at 100°C for one hour): 165000
Barrier material 3 (Parylene D): 7000
Barrier material 3-A (Parylene D, annealed at 210°C for two hours): 44000
Barrier material 3-B (Parylene D, annealed at 150°C for one hour): 20000
Barrier material 3-C (Parylene D, annealed at 100°C for one hour): 15000

### Comparative Examples 1 to 5

PPS was used as a test piece.

### Comparative Examples 6 and 7

PEI was used as a test piece.

### Comparative Example 8

PEEK was used as a test piece.

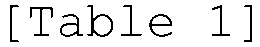

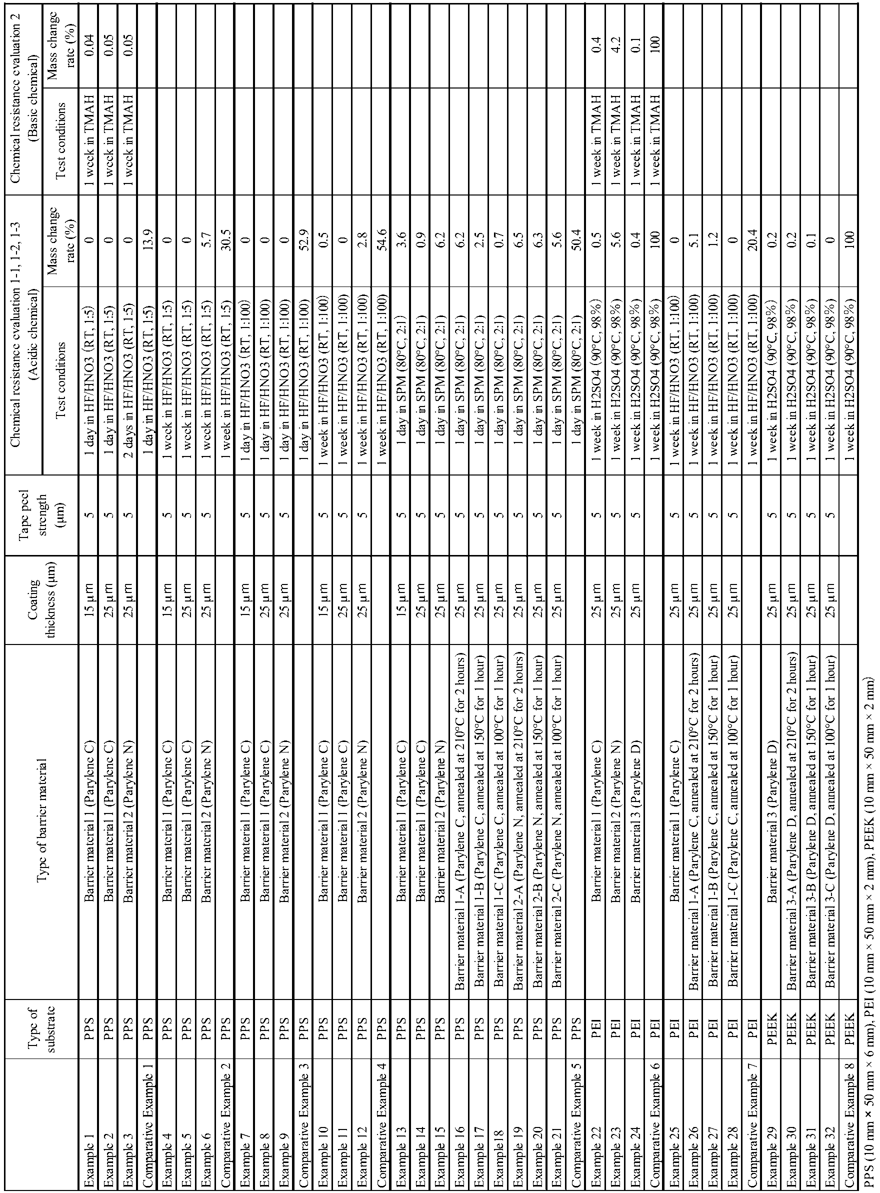

The laminated members of the examples were suitable for use as members (parts) in a semiconductor manufacturing-related apparatus in which a chemical is used.

## Claims

1. A member comprising
a material (a) with a surface at least partially laminated with an aromatic ring-containing barrier material,
the member including at least one selected from the group consisting of an architectural finishing material member, a mobility member, an aerospace member, a semiconductor member, and an information and communication member.

2. The member according to claim 1,
wherein the aromatic ring-containing barrier material has an aromatic content (a proportion of carbon atoms in a molecule that constitute an aromatic ring) of 20% or more.

3. The member according to claim 1 or 2,
wherein the aromatic ring-containing barrier material includes at least one selected from the group consisting of a compound represented by the following formula (a), a compound represented by the following formula (b), and a compound represented by the following formula (c): 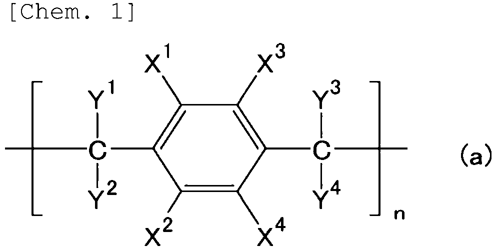 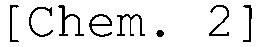 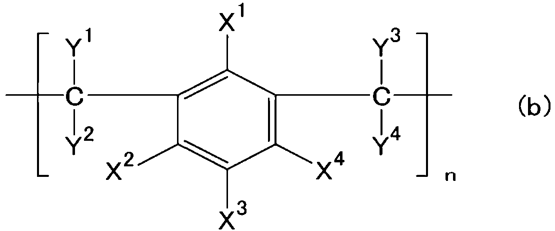 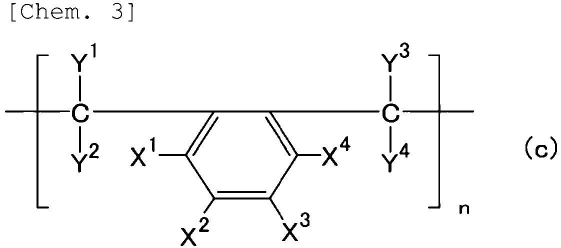 wherein X¹ to X⁴ are each independently hydrogen, a halogen, a monovalent hydrocarbon group, or an optionally fluorinated alkoxy group; Y¹ to Y⁴ are each independently hydrogen or a halogen; and n is an integer of 1 or greater.

4. The member according to any one of claims 1 to 3,
wherein the aromatic ring-containing barrier material includes at least one selected from the group consisting of polyparaxylene and polyparaxylene having a halogen introduced into a benzene ring.

5. The member according to any one of claims 1 to 3,
wherein the aromatic ring-containing barrier material includes at least one selected from the group consisting of a polymer represented by the following formula (1), a polymer represented by the following formula (2), and a polymer represented by the following formula (5):

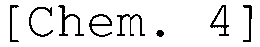

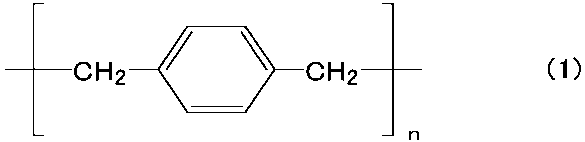

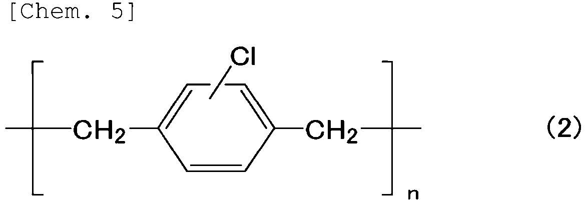

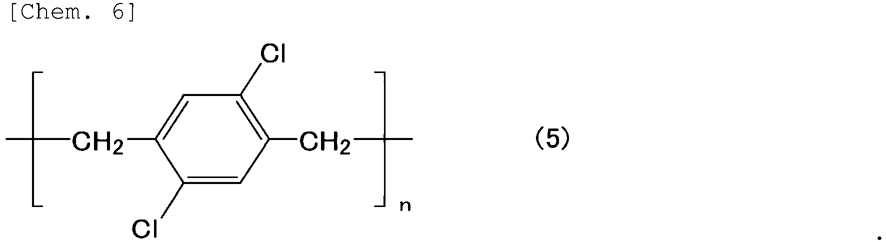

6. The member according to any one of claims 1 to 3,
wherein the aromatic ring-containing barrier material includes at least one selected from the group consisting of a polymer represented by the following formula (2) and a polymer represented by the following formula (5):

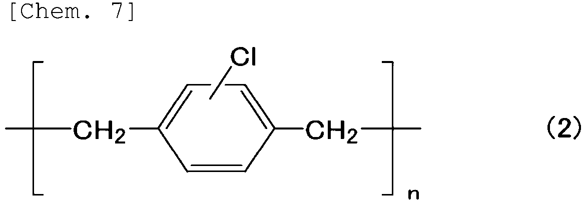

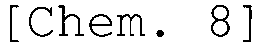

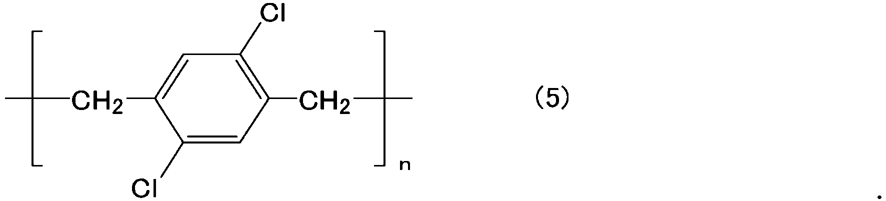

7. The member according to any one of claims 1 to 6,
wherein the material (a) includes at least one selected from the group consisting of resin, rubber, metal, and ceramic.

8. The member according to any one of claims 1 to 7,
wherein the material (a) includes at least one selected from the group consisting of resin and rubber.

9. The member according to any one of claims 1 to 8,
wherein the material (a) includes at least one selected from the group consisting of polyphenylene sulfide, a polyetherimide resin, and a polyether ether ketone resin.

10. The member according to any one of claims 1 to 9,
wherein the material (a) has a 1% mass reduction by thermal decomposition, at a temperature of 560°C or lower.

11. The member according to any one of claims 1 to 10,
wherein the aromatic ring-containing barrier material constitutes a coating having a thickness of 0.01 to 100 µm.

12. The member according to any one of claims 1 to 11,
wherein the aromatic ring-containing barrier material constitutes a coating having a thickness of 1 to 50 µm.

13. The member according to any one of claims 1 to 12,
wherein the member includes at least one selected from the group consisting of a piping material, a nozzle, a tube, a tank, a container, a joint, a valve, a pump, a spin chuck, an O-ring, a packing, a gasket, a washer, and a sealing material.

14. The member according to any one of claims 1 to 13,
wherein the member is for a semiconductor manufacturing-related apparatus.

15. The member according to claim 14,
wherein the semiconductor manufacturing-related apparatus is an apparatus in which a chemical is used.

16. The member according to claim 15,
wherein the chemical includes at least one selected from the group consisting of TMAH ([(CH₃)₄N]⁺[OH]⁻), sulfuric acid, isopropyl alcohol, hydrofluoric acid, a mixed acid of hydrofluoric acid and nitric acid, a sulfuric acid hydrogen peroxide mixture (SPM), SC1 (a mixture of NH₄OH, H₂O₂, and H₂O), SC2 (a mixture of HCl, H₂O₂, and H₂O), phosphoric acid, and hydrochloric acid.

17. The member according to claim 15,
wherein the chemical includes at least one selected from the group consisting of a silicon-based gas, an arsenic-based gas, a phosphorus-based gas, a boron-based gas, a metal hydride gas, a metal alkyl gas, a halogenated hydrocarbon gas, a halogen-halide gas, a nitrogen oxide gas, hydrogen sulfide gas, ammonia gas, trimethylamine gas, propane gas, trimethylaluminum gas, hydrogen gas, helium gas, nitrogen gas, oxygen gas, argon gas, and carbon dioxide gas.

18. The member according to any one of claims 14 to 17,
wherein the member for a semiconductor manufacturing-related apparatus has a surface that comes into contact with the chemical, at least partially laminated with the aromatic ring-containing barrier material.

19. The member according to any one of claims 14 to 18,
wherein the member for a semiconductor manufacturing-related apparatus is for a semiconductor manufacturing-related apparatus in which a chemical is used, and has a surface that comes into contact with the chemical, at least partially laminated with the barrier material.

20. The member according to any one of claims 1 to 19,
wherein the member has a mass change rate of 70.0% by mass or less in the following chemical resistance evaluation:
(Chemical resistance evaluation)
a test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours;
after drying, the mass of the test piece before immersion is measured at room temperature (20°C);
the test piece after the measurement is completely immersed in a mixed acid of hydrofluoric acid and nitric acid (hydrofluoric acid concentration 50%, nitric acid concentration 60%) having a concentration ratio (molar ratio) of hydrofluoric acid to nitric acid of 1:5 or a mixed acid of hydrofluoric acid and nitric acid (hydrofluoric acid concentration 50%, nitric acid concentration 60%) having a concentration ratio (molar ratio) of hydrofluoric acid to nitric acid of 1:100, and held at room temperature (20°C) for one day (24 hours) or one week (168 hours);
the test piece after the holding is washed with pure water, wiped to remove water droplets on a surface, and dried at 60°C for 12 hours;
the mass of the test piece after the immersion is measured at room temperature (20°C); and
the mass change rate (%) is calculated from the masses measured before and after the immersion.

21. The member according to any one of claims 1 to 20,
wherein the member has a mass change rate of 70.0% by mass or less in the following chemical resistance evaluation:
(Chemical resistance evaluation)
a test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours;
after drying, the mass of the test piece before immersion is measured at room temperature (20°C);
the test piece after the measurement is completely immersed in SPM (concentrated sulfuric acid and hydrogen peroxide solution in a volume ratio of 2:1) and held at room temperature (20°C) for one day (24 hours);
the test piece after the holding is washed with pure water, wiped to remove water droplets on a surface, and dried at 60°C for 12 hours;
the mass of the test piece after the immersion is measured at room temperature (20°C); and
the mass change rate (%) is calculated from the masses measured before and after the immersion.

22. The member according to any one of claims 1 to 21,
wherein the member has a mass change rate of 70.0% by mass or less in the following chemical resistance evaluation:
(Chemical resistance evaluation)
a test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours;
after drying, the mass of the test piece before immersion is measured at room temperature (20°C);
the test piece after the measurement is completely immersed in concentrated sulfuric acid (98%) and held at 90°C for one week (168 hours);
the test piece after the holding is washed with pure water, wiped to remove water droplets on a surface, and dried at 60°C for 12 hours;
the mass of the test piece after the immersion is measured at room temperature (20°C); and
the mass change rate (%) is calculated from the masses measured before and after the immersion.

23. The member according to any one of claims 1 to 22,
wherein the member has a mass change rate of 70.0% by mass or less in the following chemical resistance evaluation:
(Chemical resistance evaluation)
a test piece including the member (a test piece including the material (a) with a surface entirely laminated with a coating including the aromatic ring-containing barrier material, size of the material (a): 10 mm × 50 mm × 6 mm, thickness of the coating: 15 µm) is dried at 60°C for two hours;
after drying, the mass of the test piece before immersion is measured at room temperature (20°C);
the test piece after the measurement is completely immersed in TMAH ([(CH₃)₄N]⁺[OH]⁻) (25% concentration) at 80°C and held for one week (168 hours);
the test piece after the holding is washed with pure water, wiped to remove water droplets on a surface, and dried at 60°C for 12 hours;
the mass of the test piece after the immersion is measured at room temperature (20°C); and
the mass change rate (%) is calculated from the masses measured before and after the immersion.

24. A method for producing the member according to any one of claims 1 to 23, the method comprising:
producing the member at a temperature equal to or lower than a temperature at which the material (a) has a 1% mass reduction by thermal decomposition.

25. The method for producing the member according to claim 24, the method further comprising:
coating a surface of the material (a) with the aromatic ring-containing barrier material by CVD, sputtering, ion deposition, or vacuum deposition.

26. A semiconductor manufacturing-related apparatus comprising the member according to any one of claims 1 to 23 mounted thereon.

27. The semiconductor manufacturing-related apparatus according to claim 26, which includes at least one selected from the group consisting of a semiconductor manufacturing apparatus and a semiconductor manufacturing apparatus-related apparatus.

28. The semiconductor manufacturing-related apparatus according to claim 27,
wherein the semiconductor manufacturing apparatus includes at least one selected from the group consisting of a thin film formation/etching/cleaning/drying apparatus, an inspection/evaluation and manufacturing apparatus, a wafer processing apparatus, a resist processing apparatus, an etching apparatus, a cleaning/drying apparatus, a heat treatment apparatus, a CVD apparatus, a sputtering apparatus, a thin film formation apparatus, an inspection/evaluation apparatus, a processing apparatus, a dicing apparatus, a bonding apparatus, a packaging apparatus, a testing apparatus, a probing apparatus, a handler, an aging apparatus, and an inspection apparatus; and
the semiconductor manufacturing apparatus-related apparatus includes at least one selected from the group consisting of a transport apparatus, a pure water/chemical liquid apparatus, a gas apparatus, a clean room apparatus, and a manufacturing-related apparatus.

29. The semiconductor manufacturing-related apparatus according to claim 28,
wherein the thin film formation/etching/cleaning/drying apparatus includes at least one selected from the group consisting of a vacuum deposition apparatus, a sputtering apparatus, a cleaning apparatus, a drying apparatus, and a scrub cleaning apparatus;
the inspection/evaluation and manufacturing apparatus is a defect repair apparatus,
the wafer processing apparatus is a wafer marking apparatus,
the resist processing apparatus includes at least one selected from the group consisting of a coating apparatus, a developing apparatus, a resist stripping apparatus, an ashing apparatus, and a baking apparatus;
the etching apparatus includes at least one selected from the group consisting of a dry etching apparatus and a wet etching apparatus;
the cleaning/drying apparatus includes at least one selected from the group consisting of a dry cleaning apparatus, a wet cleaning apparatus, a scrub cleaning apparatus, and a drying apparatus;
the heat treatment apparatus includes at least one selected from the group consisting of an oxidation apparatus, a diffusion apparatus, and an annealing apparatus;
the CVD apparatus includes at least one selected from the group consisting of a high-pressure CVD apparatus, a SACVD apparatus, a low-pressure CVD apparatus, a metal CVD apparatus, and an ALD apparatus;
the thin film formation apparatus includes at least one selected from the group consisting of a vacuum deposition apparatus, a compound semiconductor epitaxial apparatus (MOCVD apparatus, MBE apparatus), and a plating apparatus;
the inspection/evaluation apparatus is an Auger electron spectroscopy apparatus,
the processing apparatus includes at least one selected from the group consisting of a wafer marking apparatus, a back grinding machine, a bump plating apparatus, a back grinder tape applicator, a back grinder, and a back grinder tape peeler;
the dicing apparatus includes at least one selected from the group consisting of a dicing apparatus and a wafer mounting apparatus,
the bonding apparatus includes at least one selected from the group consisting of a die bonding apparatus, a hybrid bonding apparatus, a wire bonding apparatus, an inner lead bonding apparatus, an outer lead bonding apparatus, and a flip chip bonding apparatus;
the packaging apparatus includes at least one selected from the group consisting of a molding apparatus, a deburring apparatus, and a soldering apparatus;
the testing apparatus includes at least one selected from the group consisting of an electron beam testing apparatus and a laser beam testing apparatus;
the probing apparatus is a prober,
the aging apparatus includes at least one selected from the group consisting of an aging apparatus, a burn-in apparatus, an IC insertion apparatus, and an IC extraction apparatus;
the inspection apparatus includes at least one selected from the group consisting of a thermal test apparatus, a temperature and humidity test apparatus, a pressure cooker apparatus, a laser processing system, and a life test apparatus;
the transport apparatus is a stocker,
the pure water/chemical liquid apparatus includes at least one selected from the group consisting of a pure water production apparatus, an ultrafiltration apparatus, a reverse osmosis apparatus, a sterilization apparatus, a chemical supply apparatus, a slurry supply apparatus, a chemical purification apparatus, and a waste liquid treatment apparatus;
the gas apparatus includes at least one selected from the group consisting of a gas generation apparatus, a gas purification apparatus, a gas mixing apparatus, a gas detection apparatus, and an exhaust gas treatment apparatus;
the clean room apparatus includes at least one selected from the group consisting of a clean bench, a clean tunnel, an environmental test apparatus, an air shower, and a pass box;
the manufacturing-related apparatus includes at least one selected from the group consisting of a jig cleaning/drying apparatus, a flow control instrument, a taping apparatus, a packaging apparatus, and a liquid/gas measuring instrument.
